# EUROPEAN PATENT SPECIFICATION

(11) **EP 4 144 642 B1**
(45) Date of publication and mention of the grant of the patent: **07.08.2024**
(21) Application number: 21194688.4
(22) Date of filing: 03.09.2021
(51) Int. Cl.: B64D 11/00

(54) **OVERHEAD STOWAGE COMPARTMENT WITH SLIDING JOINT, AND VEHICLE HAVING THE SAME**
ÜBERKOPFSTAURAUM MIT SCHIEBEVERBINDUNG UND FAHRZEUG DAMIT
CASIER À BAGAGES SUSPENDU DOTÉ DE JOINT COULISSANT ET VÉHICULE LE COMPORTANT

(43) Date of publication of application: 08.03.2023
(73) Proprietor: Airbus Operations GmbH, 21129 Hamburg (DE)
(72) Inventor: Benthien, Hermann, 21129 Hamburg (DE); Rademacher, Michael, 21129 Hamburg (DE); Leuenberger, Frank, 21129 Hamburg (DE); Müller, Florian, 21129 Hamburg (DE); Gruner, Thade, 21129 Hamburg (DE)
(74) Representative: Schornack, Oliver

(56) References cited:
- EP-A1- 1 293 383
- DE-A1- 10 327 985
- US-A- 5 197 775
- US-A1- 2011 180 664
- US-A1- 2019 092 473

## Description

The invention relates to an overhead stowage compartment having a sliding joint, and an aircraft comprising such compartment. Particularly, the invention relates to an overhead stowage compartment hinged at a back side and having a sliding joint for connecting a flap, and further relates to an aircraft having such overhead stowage compartment.

Vehicles for transporting passengers, such as aircraft, buses, trains and ships, are usually equipped with overhead stowage compartments (OHSC), which are usually arranged above passenger seats and next to an aisle, through which passengers can reach the seats. Such compartments are conventionally mounted to a primary vehicle structure in a crown area of the vehicle, i.e. at or near a ceiling area of the vehicle. The size of such compartments is limited by a region in the crown area above the aisle as well as a region above the seats, which should be free for standing and sitting passangers. In other words, the overhead stowage compartments cannot be sized to big, as they would otherwise hinder passengers and/or attendants serving sitting passengers. On the other hand, the compartments cannot be too small, since they shall have a minimum stowage capacity for receiving luggage, particularly standard sized hand luggage items.

Thus, rotatable overhead stowage compartments were developed, which can be brought into a position where an opening into the stowage space is lowered for placing and taking items from the compartment and in an upper position when the stowage space is closed. This, on the other hand, requires pushing the compartment upwards, when it is filled with luggage and, hence, can be quite heavy.

It is therefore an object of the invention to provide an overhead stowage compartment that is easier to close.

The document US5197775 describes a glove compartment comprising an upper lid having a closed position forming a horizontal surface with the instrument panel and pivotally mounted to it. It has a lower door having a closed position forming a vertical surface of the instrument panel abutting the lid to close the glove compartment and pivotally mounted to it. Vertically spaced pins are disposed in the instrument panel. Lid arms are carried with the lid and pivotally engaged with one of the pins. Door arms are carried with the door and pivotally mounted on another of the pins. Cooperative linkage is disposed between the lid arms and the door arms to effect opening movement of the lid upon opening movement of the door.

This object is solved by an overhead stowage compartment with the features of claim 1, and an aircraft with the features of claim 6.

Preferred embodiments are defined by the dependent claims.

According to the claimed invention, an overhead stowage compartment for a passenger transport vehicle comprises a compartment body having an opening to provide access to an interior space of the compartment body, and a first hinge arranged at a back side of the compartment body opposite to the opening. The first hinge allows the compartment body to rotate around a first fixed axis. The compartment body is, thus, capable of receiving luggage, for example, through the opening. In addition, the compartment body can be rotated around the first fixed axis facilitating lowering the compartment body, so that the opening is easier to reach, and further lifting the compartment body, for example, for times when access to the compartment is not required (e.g., during travel of the vehicle).

The overhead stowage compartment further comprises a flap configured to close the opening of the compartment body, and a sliding joint connecting the flap to an upper side of the compartment body. The flap is sized to cover the opening of the compartment body, for example, to avoid any items stored in the compartment body from falling out. The sliding joint functions as a floating hinge, i.e. provides for a rotational movement as well as a sliding movement along a path defined by the sliding joint. This further allows moving the flap relative to the compartment body, for example, from a closed position (closing the opening in the compartment body) to an open position, in which the opening in the compartment body is not covered and items can be placed into the interior space of the compartment body or can be taken out.

Due to the sliding movement combined with the rotational movement of the sliding joint, the space required for the entire overhead stowage compartment is reduced. Specifically, moving the compartment body and the flap at the same time and relative to one another allows opening and closing the flap without performing the same movement with the flap as the compartment body.

In addition, since the flap and the compartment body are linked to one another via the sliding joint, the flap can be used to move the compartment body. For instance, moving the flap, for example, to a closed position may induce a movement of the compartment body via the sliding joint, for example, towards a stowed position of the compartment body. Thus, the flap can function as a handle to operate (rotate) the compartment body.

Furthermore, the first hinge and its first fixed axis can be arranged anywhere at the back side of the compartment body. This includes any position between a top edge of the back side and a bottom edge of the back side. The location of the first hinge at or near the bottom edge of the back side of the compartment body achieves a greater radial movement of the compartment body, since the sliding joint is arranged at the upper side of the compartment body. Specifically, the distance between the first hinge and the sliding joint and, hence, a radius of the rotational movement of the compartment body, is larger when the first hinge is at or near the bottom edge compared to a first hinge at or near the top edge of the back side.

According to the claimed invention, the overhead stowage compartment comprises a second hinge arranged at the flap and allowing the flap to rotate around a second fixed axis. Particularly, the flap can rotate, for example, from a closed position to an open position around the second fixed axis.

Moreover, the first and second fixed axis are arranged parallel to one another.

Thus, the movement of the flap around the second fixed axis induces a movement of the compartment body around the first fixed axis via the sliding joint. Thus, the flap can function as a lever to operate (rotate) the compartment body. If the second fixed axis lies above the first fixed axis, the side of the compartment body having the opening can be lifted when moving the flap towards the compartment body, for example, to a closed position of the flap. The compartment body may, hence, achieve a stowed position, wherein a bottom of the compartment body forms a slant, so that items can glide towards the back side of the compartment body.

In another implementation variant, a sliding bearing of the sliding joint can be mounted to the flap, and a revolute joint of the sliding joint can be provided on, in or at the compartment body. The revolute joint can be configured to slide along the sliding bearing. This allows moving the sliding bearing relative to the compartment body, for example, in a space above the compartment body. Of course, the revolute joint can be arranged at a lateral side of the compartment body, so that the sliding bearing moves at the side of the compartment body.

For instance, the sliding bearing can be implemented as a single sliding surface, along which the revolute joint can glide. Alternatively, the sliding bearing can have two parallel sliding surfaces, between which the revolute joint glides. The latter allows securing the revolute joint in the sliding bearing.

Furthermore, the revolute joint can be implemented as a bolt, a rotational item (such as a cylinder, a rotational bearing, a ball or the like) or any other joint allowing pivoting relative to the sliding bearing.

In a further implementation variant, a sliding bearing of the sliding joint can be mounted on an exterior surface of the compartment body or can be provided in the compartment body, and a revolute joint of the sliding joint can be provided at the flap. The revolute joint can be configured to slide along the sliding bearing. This allows integrating the majority of the sliding joint, i.e. the relatively larger sliding bearing, to or into the compartment body, so that the sliding bearing does not require any significant space outside of the compartment body. In a simple implementation, the sliding bearing can be formed as a recess in an exterior surface of a lateral side of the compartment body.

The sliding bearing and revolute joint can be implemented in the same manner as described for the previous implementation variant.

According to the claimed invention, the flap has two portions arranged at an angle to one another in cross-section. In other words, when viewing a cross-section of the overhead stowage compartment in a plane substantially perpendicular to the first and/or second fixed axis, the flap has two portions forming an angle. This reduces a size of the flap and can further facilitate moving the compartment body.

Furthermore, the second hinge is arranged at the junction of the two portions.

Thus, both portions of the flap move around the second fixed axis. The sliding joint is arranged at one of the portions of the flap, so that the other portion can be used as a handlebar and lever arm for moving the flap together with the compartment body. According to the claimed invention, the portion of the flap at which the sliding joint is arranged is shorter than the other portion, the other portion forms a lever arm to facilitate lifting and lowering the compartment body.

In a further implementation variant, the sliding bearing of the sliding joint is curved and provides a curved sliding path for the revolute joint. For instance, if the sliding bearing is attached to the flap, the curvature of the sliding bearing allows a simple form of the flap. If the curvature of the sliding bearing corresponds to a radius around the second hinge (around the second fixed axis), the flap can be straight or only slightly bent. If the sliding bearing is attached to the compartment body or to the flap, the curvature facilitates moving the compartment body. For instance, the curved sliding bearing can, if curved in one direction, increase a lifting and lowering distance of the compartment body, and if curved in the other direction, reduce the lifting and lowering distance of the compartment body but reduce the force required to move the compartment body via the flap and the sliding joint. Thus, the curvature can be used to implement a particular gear ratio.

In another implementation variant, the overhead stowage compartment further comprises a closing support configured to provide a lifting force onto the compartment body or a closing force on the flap. For instance, the closing support can simply be implemented as a spring, which is wound up when the compartment body moves into an open position (is lowered), so that the spring acts with a greater force onto the compartment body in a lifting direction. Of course, the spring can be attached to the flap, to support the movement of the flap towards the closed position and, hence, the stowed position of the compartment body. It is to be understood that the closing support can act on the compartment body as well as the flap and/or multiple closing supports respectively act on the compartment body and the flap. Another implementation of the closing support can be a motor or a pneumatic or hydraulic piston.

According to a second exemplary aspect to better understand the present disclosure, a vehicle comprises at least one overhead stowage compartment according to the first aspect or at least one of its implementation variants or examples. For instance, the vehicle can be an aircraft, a train, a bus, a ship or other passenger transport vehicle.

In an implementation variant, a first overhead stowage compartment in the aircraft can be arranged adjacent to a second overhead stowage compartment, so that the back side of the first compartment faces the back side of the second compartment. In other words, when viewed in a cross-section of the aircraft (substantially perpendicular to a longitudinal axis of the aircraft), the first and second compartments are adjacent to one another and have their respective opening facing in opposite directions. The first hinge of the first and second compartments can share a common axis of rotation. For example, the first and second compartments can share a common first hinge or can share a common installation rail or similar structure, around which each of the first and second compartments rotate. This allows arrangement of two overhead stowage compartments in a small space, for example, above centre passenger seats in a vehicle having two passenger aisles.

Preferred embodiments of the invention are now explained in greater detail with reference to the enclosed schematic drawings, in which
- Figure 1: schematically illustrates cross-sectional views of an overhead stowage compartment in a closed position and an open position;
- Figure 2: schematically illustrates cross-sectional views of another overhead stowage compartment in a closed position and an open position;
- Figure 3: schematically illustrates perspective views of the overhead stowage compartment of Figure 1 in different positions; and
- Figure 4: schematically illustrates a vehicle.

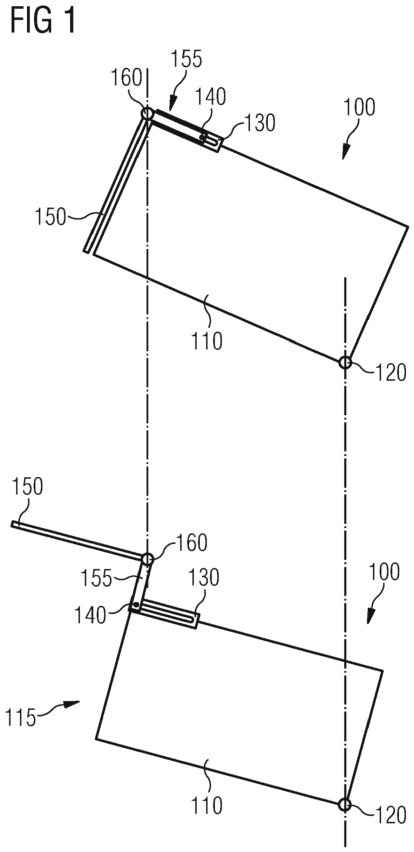

Figure 1 schematically illustrates cross-sectional views of an overhead stowage compartment 100 in a closed position (upper portion of Figure 1) and an open position (lower portion of Figure 1). The overhead stowage compartment 100 comprises a compartment body 110 and a flap 150, wherein the flap 150 can close an opening 115 of the compartment body 110. The opening 115 provides access to an interior space of the compartment body 110, which can be used, for example, for stowage of luggage and other items to be stowed away.

The compartment body 110 is hinged with a first hinge 120 and can rotate around a first fixed axis (perpendicular to the drawing plane of Figure 1) defined by the first hinge 120. The first hinge 120 can be mounted to a primary structure of a vehicle (not illustrated) or any other component of the vehicle that is fix and can support the weight of the compartment 100. It is to be understood that the first hinge 120 can be arranged anywhere at the back side (right side in Figure 1) of the compartment body 110. The illustrated location of the first hinge 120 at the bottom edge is for illustration purposes only.

The overhead stowage compartment 100 is further mounted to a second fixed axis at a second hinge 160. The second hinge 160 can rotate around the second fixed axis (running perpendicular to the drawing plane of Figure 1) that is parallel to the first fixed axis. The second hinge 160 is arranged at the flap 150 and allows the flap 150 to rotate around the second fixed axis.

In addition, the flap 150 and the compartment body 110 are connected to one another via a sliding joint 130, 140. Specifically, the sliding joint comprises sliding bearing 130 mounted at the compartment body 110. In Figure 1 the sliding bearing 130 is illustrated at an upper exterior surface of the compartment body 110. This is to be understood as only one possible location of the sliding bearing 130 and has been chosen for ease of illustration. For instance, the sliding bearing 130 can be integrated into a top or a side wall of the compartment body 110.

A revolute joint 140 of the sliding joint is provided at the flap 150 and is configured to slide along the sliding bearing 130. For instance, the flap 150 as illustrated has two portions arranged at an angle to one another, wherein the second hinge 160 is arranged at the junction of both portions of the flap 150. The revolute joint 140 can be arranged at one portion 155 arranged between the second hinge 160 and the compartment body 110. For example, the revolute joint 140 can be provided at a free end of the portion 155. The other portion of the flap 150 can be damage and to close the opening 115 of the compartment body 110.

Thus, a movement of the flap 150 at the second hinge 160 requires a movement of the compartment body 110 at the first hinge 120, and vice versa. Nevertheless, since the first and second hinges 120, 160 have respective fixed axis (fixed in a plane corresponding to the drawing plane of Figure 1, and indicated in Figure 1 with dashdotted lines), a rotation of the revolute joint 140 around the second fixed axis at second hinge 160 requires a relative movement between revolute joint 140 and compartment body 110 besides a relative rotation between both components. The sliding bearing 130 allows this relative movement.

In Figure 1 sliding bearing 130 is illustrated as a straight bearing. It is to be understood that the sliding bearing 130 can also have a curvature. Depending on the direction of the curvature upwards or downwards (at its right end in Figure 1), the movement of the compartment body 110 induced by the movement of the flap 150 via revolute joint 140 is either reduced or increased, respectively.

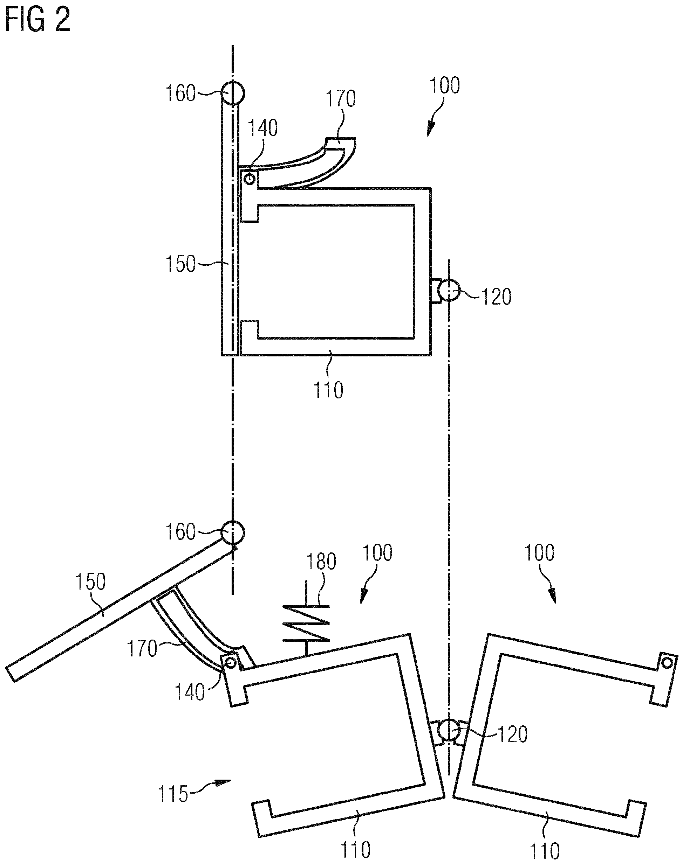

Figure 2 schematically illustrates cross-sectional views of another overhead stowage compartment 100 in a closed position (upper portion of Figure 2) and an open position (lower portion of Figure 2). The components of the overhead stowage compartment 100, which are the same or at least functionally the same as those of the compartment 100 of Figure 1 are indicated by the same reference numeral. The description of these components is omitted, in order to avoid redundant explanations.

The difference between the compartment 100 of Figure 1 compared to the compartment 100 of Figure 2 is that in Figure 2 a sliding joint is implemented that has a sliding bearing 170 mounted to the flap 150, and a revolute joint 140 of the sliding joint that is provided on, at or in the compartment body 110. This allows an easier structure of the compartment body 110 and easier installation. Nevertheless, when flap 150 rotates around second hinge 160, the revolute joint 140 glides or slides in sliding bearing 170. This induces a rotational movement of the compartment body 110 at the first hinge 120 in the same manner as described above with respect to Figure 1.

It is to be understood, that the curved sliding bearing 170 as illustrated in Figure 2 is only exemplary. Of course, the curvature can be in the opposite direction (the right end of sliding bearing 170 facing downwards in Figure 2), or the sliding bearing 170 can be straight.

Furthermore, flap 150 is illustrated straight in Figure 2 as an exemplary implementation only. It is to be understood that flap 150 can also be curved or include one or more bents.

Figure 2 further illustrates a closing support 180 configured to provide a lifting force onto the compartment body 110. The closing support 180, exemplarily illustrated as a spring, induces a tension force onto the compartment body 110 facilitating lifting of the compartment body 110 (upwards in Figure 2).

Furthermore, a closing support (not illustrated) may be attached to the flap 150 providing a force onto the flap 150 and moving the flap 150 towards the closed position (shown in the upper portion of Figure 2). Of course, multiple closing supports 180 may be employed acting on the compartment body 110 and/or onto the flap 150.

It is to be understood that the exemplary embodiment of Figure 1 can also include one or more of such a closing support 180.

Figure 2 further illustrates (only in the lower part thereof) a configuration with two adjacent overhead stowage compartments 100, which are both configured identical to the one described above. The compartments 100 are arranged to one another, so that their respective back sides face each other. In addition, the first hinge 120 of the first compartment 100 (e.g., to the left) and the first hinge 120 of the second compartment 100 (e.g., to the right) can share a common axis of rotation. Both compartment bodies 110 can also be mounted to a common hinge 120. This allows installation of pairwise compartments 100 in an easy manner and with less mounting components. The space of installation is also reduced, so that larger compartment bodies 110 can be employed.

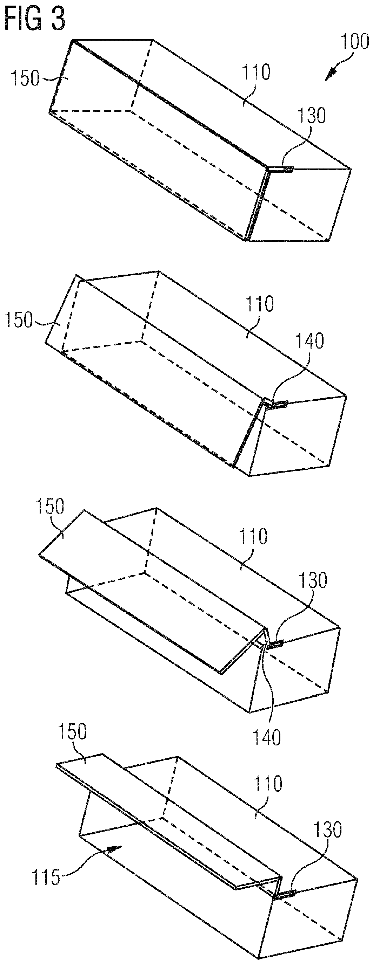

Figure 3 schematically illustrates perspective views of the overhead stowage compartment 100 of Figure 1 in different positions. Specifically, from top to bottom of Figure 3, the overhead stowage compartment 100 moves from a stowed position to an open position. As can be derived from the drawing, the flap 150 and the compartment body 110 perform rotational movements of opposite radial directions. Particularly, the flap 150 moves from the closed position to the open position in a clockwise direction, while the compartment body 110 moves from the closed position to the open position in an anti-clockwise direction

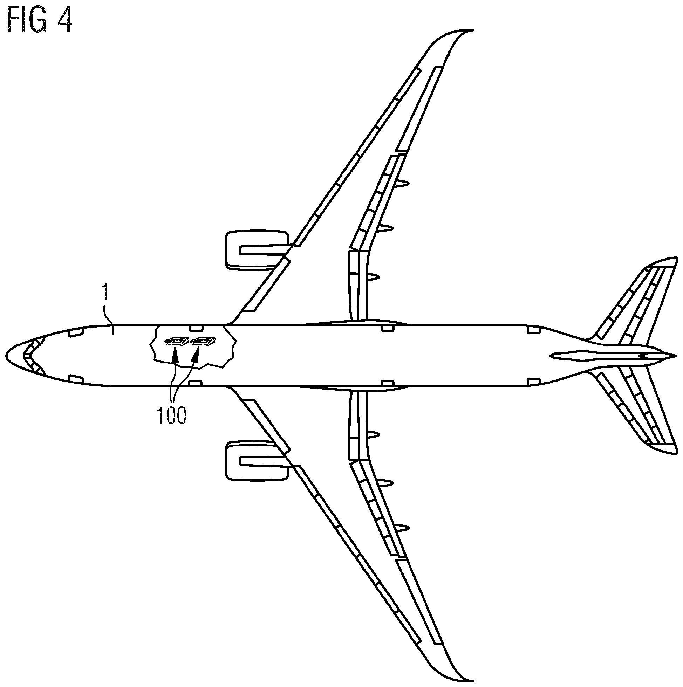

Figure 4 schematically illustrates a vehicle 1 comprising at least one overhead stowage compartment 100. A portion of the skin of the vehicle 1, here an aircraft as a possible example, is cut in Figure 4 and shows two overhead stowage compartments 100 arranged adjacent to one another in a longitudinal direction of the vehicle 1. For instance, the opening 115 of each compartment 100 can face in the same direction (here downwards in Figure 4).

The above description of the drawings is to be understood as providing only exemplary embodiments of the present invention and shall not limit the invention to these particular embodiments.

## Claims

1. An overhead stowage compartment (100) for a passenger transport vehicle (1), the compartment (100) comprising:
a compartment body (110) having an opening (115) to provide access to an interior space of the compartment body (110);
a first hinge (120) arranged at a back side of the compartment body (110) opposite to the opening (115), the first hinge (120) allowing the compartment body (110) to rotate around a first fixed axis;
a flap (150);
a sliding joint (130, 140) connecting the flap (150) to an upper side of the compartment body (110); and
a second hinge (160) allowing the flap (150) to rotate from a closed position to an open position around a second fixed axis,
wherein the flap (150) has a first flap portion (155) and a second flap portion arranged at an angle to one another in a cross-section of the stowage compartment (100) substantially perpendicular to the first and second fixed axis, the second hinge (160) being arranged at a junction of the first and second flap portions, and
wherein the sliding joint (130, 140) is arranged at the first flap portion (155),
wherein the first flap portion (155) is shorter than the second flap portion, and
wherein the second flap portion (150) is configured to close the opening (115) of the compartment body (110).

2. The compartment (100) according to claim 1, wherein the sliding joint (130, 140) comprises a sliding bearing (130) mounted at the compartment body (110) and a revolute joint (140), the revolute being arranged at a free end of the first flap portion (155) in the cross-section of the stowage compartment (100).

3. The compartment (100) according to claim 1, wherein a sliding bearing (130) of the sliding joint is mounted on an exterior surface of the compartment body (110) or is provided in the compartment body (110), and a revolute joint (140) of the sliding joint is provided at the flap (150), wherein the revolute joint (140) is configured to slide along the sliding bearing (130).

4. The compartment (100) according to claim 3, wherein the sliding bearing (130) of the sliding joint is curved and provides a curved sliding path for the revolute joint (140).

5. The compartment (100) according to one of claims 1 to 4, further comprising:
a closing support (180) configured to provide a lifting force onto the compartment body (110) or a closing force on the flap (150).

6. An aircraft (1) comprising at least one overhead stowage compartment (100) according to one of claims 1 to 5.

7. The aircraft (1) according to claim 6, wherein a first overhead stowage compartment (100) is arranged adjacent to a second overhead stowage compartment (100), so that the back side of the first compartment faces the back side of the second compartment, and wherein the first hinge of the first and second compartments share a common axis of rotation.

## Patentansprüche

1. Überkopfstaufach (100) für ein Passagiertransportfahrzeug (1), wobei das Fach (100) Folgendes umfasst:
einen Fachkörper (110) mit einer Öffnung (115) zum Bereitstellen eines Zugangs zu einem Innenraum des Fachkörpers (110);
ein erstes Scharnier (120), das an einer Rückseite des Fachkörpers (110) gegenüber der Öffnung (115) angeordnet ist, wobei das erste Scharnier (120) ein Drehen des Fachkörpers (110) um eine erste feststehende Achse ermöglicht;
eine Klappe (150);
ein Gleitgelenk (130, 140), das die Klappe (150) mit einer Oberseite des Fachkörpers (110) verbindet; und
ein zweites Scharnier (160), das ein Drehen der Klappe (150) von einer geschlossenen Position zu einer geöffneten Position um eine zweite feststehende Achse ermöglicht,
wobei die Klappe (150) einen ersten Klappenabschnitt (155) und einen zweiten Klappenabschnitt aufweist, die in einem Winkel zueinander in einem Querschnitt des Staufachs (100) im Wesentlichen senkrecht zu der ersten und zweiten feststehenden Achse angeordnet sind, wobei das zweite Scharnier (160) an einer Anschlussstelle des ersten und des zweiten Klappenabschnitts angeordnet ist, und
wobei das Gleitgelenk (130, 140) an dem ersten Klappenabschnitt (155) angeordnet ist,
wobei der erste Klappenabschnitt (155) kürzer als der zweite Klappenabschnitt ist, und
wobei der zweite Klappenabschnitt (150) dazu ausgestaltet ist, die Öffnung (115) des Fachkörpers (110) zu verschließen.

2. Fach (100) nach Anspruch 1, wobei das Gleitgelenk (130, 140) ein an dem Fachkörper (110) montiertes Gleitlager (130) und ein Drehgelenk (140) umfasst, wobei das Drehgelenk an einem freien Ende des ersten Klappenabschnitts (155) in dem Querschnitt des Staufachs (100) angeordnet ist.

3. Fach (100) nach Anspruch 1, wobei ein Gleitlager (130) des Gleitgelenks auf einer Außenfläche des Fachkörpers (110) montiert ist oder in dem Fachkörper (110) bereitgestellt ist, und ein Drehgelenk (140) des Gleitgelenks an der Klappe (150) bereitgestellt ist, wobei das Drehgelenk (140) dazu ausgestaltet ist, entlang des Gleitlagers (130) zu gleiten.

4. Fach (100) nach Anspruch 3, wobei das Gleitlager (130) des Gleitgelenks gebogen ist und eine gebogene Gleitbahn für das Drehgelenk (140) bereitstellt.

5. Fach (100) nach einem der Ansprüche 1 bis 4, ferner umfassend:
eine Schließunterstützung (180), die dazu ausgestaltet ist, eine Hebekraft auf den Fachkörper (110) oder eine Schließkraft auf die Klappe (150) aufzubringen.

6. Luftfahrzeug (1), umfassend mindestens ein Überkopfstaufach (100) nach einem der Ansprüche 1 bis 5.

7. Luftfahrzeug (1) nach Anspruch 6, wobei ein erstes Überkopfstaufach (100) derart angrenzend an ein zweites Überkopfstaufach (100) angeordnet ist, dass die Rückseite des ersten Fachs der Rückseite des zweiten Fachs zugewandt ist, und wobei das erste Scharnier des ersten und des zweiten Fachs eine gemeinsame Drehachse aufweisen.

## Revendications

1. Casier à bagages suspendu (100) destiné à un véhicule de transport de passagers (1), le casier (100) comprenant :
un corps de casier (110) doté d'une ouverture (115) permettant d'accéder à un espace intérieur du corps de casier (110) ;
une première charnière (120) disposée au niveau d'un côté arrière du corps de casier (110) opposé à l'ouverture (115), la première charnière (120) permettant au corps de casier (110) de pivoter autour d'un premier axe fixe ;
un rabat (150) ;
un joint coulissant (130, 140) reliant le rabat (150) à un côté supérieur du corps de casier (110) ; et
une seconde charnière (160) permettant au rabat (150) de pivoter d'une position fermée à une position ouverte autour d'un second axe fixe,
le rabat (150) comportant une première partie de rabat (155) et une seconde partie de rabat disposées en angle l'une par rapport à l'autre dans une section transversale du casier à bagages (100) sensiblement perpendiculaire aux premier et second axes fixes, la seconde charnière (160) étant disposée au niveau d'une jonction des première et seconde parties de rabat, et
le joint coulissant (130, 140) étant disposé au niveau de la première partie de rabat (155),
la première partie de rabat (155) étant plus courte que la seconde partie de rabat, et
la seconde partie de rabat (150) étant conçue pour fermer l'ouverture (115) du corps de casier (110).

2. Casier (100) selon la revendication 1, le joint coulissant (130, 140) comprenant un appui à glissière (130) monté au niveau du corps de casier (110) et une articulation simple (140), l'articulation simple étant disposée au niveau d'une extrémité libre de la première partie de rabat (155) dans la section transversale du casier à bagages (100).

3. Casier (100) selon la revendication 1, un appui à glissière (130) du joint coulissant étant monté sur une surface extérieure du corps de casier (110) ou étant disposé dans le corps de casier (110), et une articulation simple (140) du joint coulissant étant fournie au niveau du rabat (150), l'articulation simple (140) étant conçue pour coulisser le long de l'appui à glissière (130).

4. Casier (100) selon la revendication 3, l'appui à glissière (130) du joint coulissant étant incurvé et fournissant une trajectoire coulissante incurvée pour l'articulation simple (140).

5. Casier (100) selon l'une des revendications 1 à 4, comprenant en outre :
un support de fermeture (180) conçu pour fournir une force de levage sur le corps de casier (110) ou une force de fermeture sur le rabat (150).

6. Aéronef (1) comprenant au moins un casier à bagages suspendu (100) selon l'une des revendications 1 à 5.

7. Aéronef (1) selon la revendication 6, un premier casier à bagages suspendu (100) étant disposé à côté d'un second casier à bagages suspendu (100), de sorte que le côté arrière du premier casier fasse face au côté arrière du second casier, et la première charnière du premier et du second casier partagent un axe de rotation commun.
